# EUROPEAN PATENT SPECIFICATION

(11) **EP 0 649 697 B1**
(45) Date of publication and mention of the grant of the patent: **29.12.1997**
(21) Application number: 94913796.2
(22) Date of filing: 21.04.1994
(51) Int. Cl.: B23H 7/20

(54) **APPARATUS FOR ELECTRIC DISCHARGE MACHINING, AND METHOD FOR SETTING MACHINING CONDITION FOR THE APPARATUS**
VORRICHTUNG ZUM ELEKTROEROSIVEN BEARBEITEN UND MASCHINENZUSTANDSEINSTELLVERFAHREN
APPAREIL D'USINAGE PAR ETINCELAGE, ET PROCEDE DE REGLAGE DU REGIME D'USINAGE POUR LEDIT APPAREIL

(30) Priority: 07.05.1993 JP 106563/93
(43) Date of publication of application: 26.04.1995
(73) Proprietor: FANUC LTD., Minamitsuru-gun, Yamanashi 401-05 (JP)
(72) Inventor: KAMIGUCHI, Masao, Fanuc Mansion Harimomi 6-207, Minamitsurugun, Yamanashi 401-05 (JP); KITA, Yuki, Fanuc Mansion Harimomi 10-203, Minamitsurugun, Yamanashi 401-05 (JP); ITO, Masaya, Fanuc Dai-3 Villa-karamatsu, Minamitsurugun, Yamanashi 401-05 (JP); YAMAGUCHI, Meguru, Fanuc Dai-3 Villa-karamatsu, Minamitsurugun, Yamanashi 401-05 (JP); SATO, Hiroshi, Fanuc Dai-1 Villa-karamatsu, Minamitsurugun, Yamanashi 401-05 (JP)
(74) Representative: Brunner, Michael John
(86) International application number: JP9400665
(87) International publication number: WO9426453

(56) References cited:
- JP-A- 3 264 215
- JP-A-61 236 434

## Description

### TECHNICAL FIELD

The present invention relates to an electric discharge machine such as a wire electric discharge machine, an engraving electric discharge machine and the like, and more specifically, to an electric discharge machine for automatically setting machining conditions and a method of setting machining conditions of the electric discharge machine.

### BACKGROUND ART

Wire electric discharge machines and engraving electric discharge machines are able to machine metal molds and the like at high speed with pinpoint accuracy due to increased machining speed, improved machining accuracy and the like. To effect machining at high speed with pinpoint accuracy, it is a very important factor to set machining conditions.

Nevertheless, machining conditions include many parameters and it needs a considerable amount of experience to optimally set the parameters, and only the limited number of experts can set the machining conditions.

To solve the above problem, a machining condition setting method of an electric discharge machine, by which machining conditions can be automatically set, is put into practical use as disclosed in, for example, Japanese Patent Examined Publication No. 5-21690 (1993).

In the Publication, when a workpiece is to be machined in a plurality of machining processes, a desired machining can be effected very effectively by automatically creating a machining program for a series of machining processes in such a manner that an operator inputs machining condition data such as a kind of machining, electrode to be used, material of a workpiece, roughness of a finally finished surface, configuration and the like.

In the above machining condition setting method of the electric discharge machine, the machining program is created based on the roughness of the finally finished surface given by the operator. By the way, the machining speed must be reduced to decrease the roughness of the finally finished surface. The operator knows the machining speed for the first time when the machining program is created. Thus, when the operator finds that a machining operation effected at the machining speed requires a time longer than he or she desires and the machining speed does not satisfy the requirement at the time, the operator automatically creates a machining program again by slightly increasing the roughness of a finally finished surface. Note, the relationship with the machining speed also arises in the same way when a dimensional accuracy is given as the machining conditions, in addition to the case in which the roughness of a finally finished surface is given as the machining conditions.

As described above, operation for changing machining conditions many times and determining whether resulting machining conditions are acceptable or not must be repeated many times to obtain a machining program capable of effecting machining satisfying the requirement at that time.

### DISCLOSURE OF THE INVENTION

Taking the above into consideration, an object of the present invention is to provide an electric discharge machine by which optimum machining conditions can be simply set.

Another object of the present invention is to provide a machining condition setting method of an electric discharge machine by which optimum machining conditions can be set.

To solve the above problem, according to the present invention, there is provided an electric discharge machine having a function for automatically determining machining conditions, which comprises correlation graph creation means for creating a correlation graph showing the correlation between a machining speed and a machining accuracy in input setting data from basic data of machining condition previously determined by experiment and displaying the correlation graph on a display screen, indicating sign control means for creating an indicating sign to be displayed on the display screen as well as moving the indicating sign to a position on the correlation graph indicated by input keys, and actual machining condition determination means for determining actual machining conditions from the basic data of machining condition, the setting data and the position indicated by the indicating sign.

Further, there is provided a machining condition determination method of an electric discharge machine for automatically setting machining conditions of the electric discharge machine, which comprises the steps of creating a correlation graph showing the correlation between a machining speed and a machining accuracy in input setting data from basic data of machining condition previously determined by experiment, displaying the correlation graph on a display screen, reading a machining speed and a machining accuracy corresponding to a point on the correlation graph indicated by an indicating sign on the display screen, and determining actual machining conditions having the machining speed and the machining accuracy by means of the basic data of machining condition and the setting data.

According to the electric discharge machine of the present invention, correlation graph creation means creates data to be displayed by a correlation graph showing the correlation between a machining speed and a machining accuracy in input setting data from basic data of machining condition previously determined by experiment and displays the display data on a display screen. Indicating sign control means creates an indicating sign to be displayed on the display screen as well as moves the indicating sign to a position on the correlation graph indicated by input keys. Actual machining condition determination means determines a machining speed and a machining accuracy from the indicating position of the indicating sign indicated by the input keys and determines actual machining conditions which have the machining speed and by which the machining accuracy can be obtained. The actual machining conditions are determined based on the basic data of machining condition and the setting data.

According to the machining condition setting method of the electric discharge machine, first, a correlation graph showing the correlation between a machining speed and a machining accuracy in input setting data is created from basic data of machining condition previously determined by experiment. Next, the correlation graph is displayed on a display screen and a machining speed and a machining accuracy corresponding to a point indicated by an indicating sign are read on the correlation graph on the display screen. Successively, actual machining conditions having the machining speed and by which the machining accuracy can be obtained are determined based on the basic data of machining condition and the setting data.

### BRIEF DESCRIPTION OF THE DRAWINGS

FIG. 1 is a block diagram explaining the principle of an electric discharge machine according to the present invention;
FIG. 2 is a view showing the schematic arrangement of a wire-cut electric discharge machine to which the present invention is applied;
FIG. 3 is a schematic block diagram showing hardware of a numerical control apparatus (CNC) for a wire-cut electric discharge machine to which the present invention is applied;
FIG. 4 is a view showing a first step of a machining condition setting method according to the present invention;
FIG. 5 is a view showing a second step of a machining condition setting method according to the present invention;
FIG. 6 (A), FIG. 6 (B), FIG. 6 (C) are views showing a main program by way of example, wherein FIG. 6 (A) is a view of a program when machining is effected once, FIG. 6 (B) is view of a program when machining is effected twice, and FIG. 6 (C) is a view of a program when machining is effected four times, respectively; and
FIG. 7 is a flowchart showing a schematic processing sequence of the present invention.

### BEST MODE OF CARRYING OUT THE INVENTION

An embodiment of the present invention will be described below with reference to the drawings.

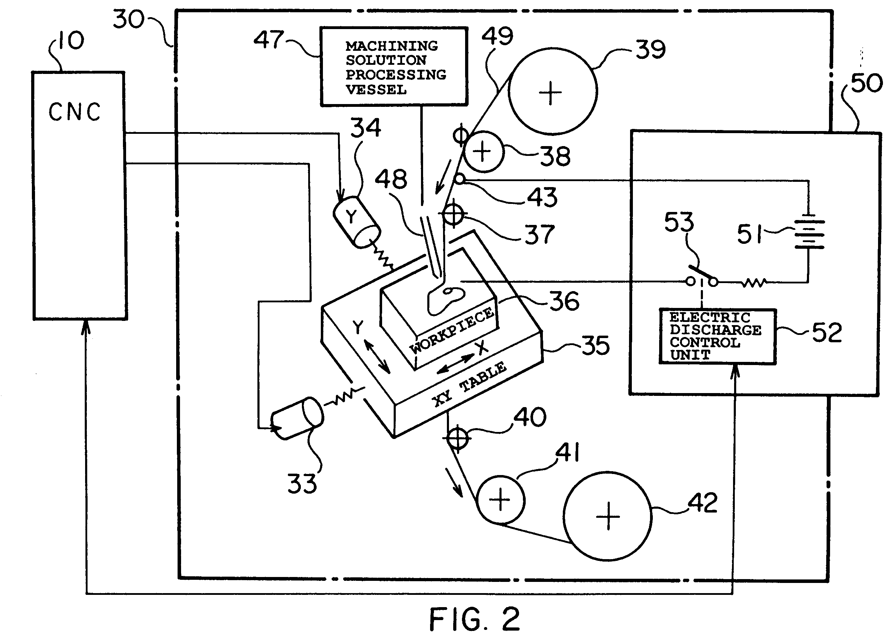

FIG. 2 is a view showing the schematic arrangement of a wire-cut electric discharge machine to which the present invention is applied. In FIG. 2, the wire-cut electric discharge machine is composed of a numerical control apparatus (CNC) 10 and an electric discharge machine main body 30.

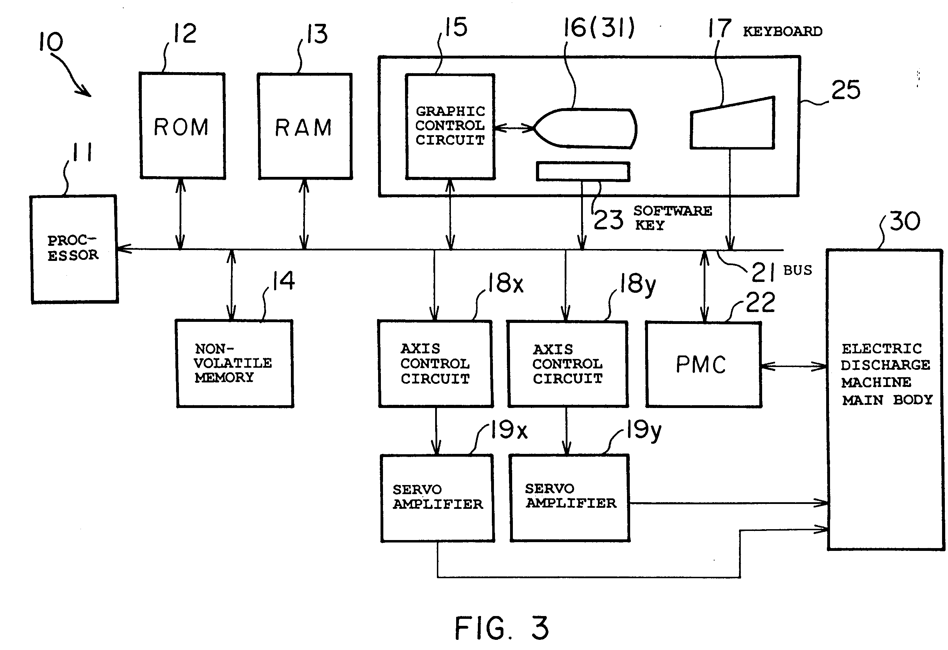

The numerical control apparatus 10 reads and decodes a machining program stored in a non-volatile memory 14 (FIG. 3) to control the electric discharge machine 30 as a whole by driving an X-axis servo motor 33 and a Y-axis servo motor 34 to move an XY table 35.

The XY table 35 can be moved in two orthogonal axis directions by the X-axis servo motor 33 and the Y-axis servo motor 34. A workpiece 36 composed of an electric conductive material is fixed on the XY table 35. An upper wire guide 37 and a lower wire guide 40 for holding a wire 49 are disposed above and below the XY table 35 and the workpiece 36. These upper and lower wire guides 37 and 40 are used to correctly position the wire 49 to the workpiece to be machined. The wire 49 is continuously fed from a feed reel 39 and reaches the workpiece 36 through a brake 38 and the upper wire guide 37. The wire 49 having passed through the workpiece 36 passes through the XY table 35 and then is accommodated in a wire winding reel 42 through the lower wire guide 40 and a wire feed roller 41.

An electric discharge voltage is supplied from a machining power supply 51 of a power supply unit 50 to the wire 49 through a power feeder 43 interposed between the upper wire guide 37 and the brake 38. On the other hand, the other end of the machining power supply 51 is electrically connected to the workpiece 36 through a switch 53 to be opened and closed by an electric discharge control unit 52. The electric discharge control unit 52 varies machining characteristics by controlling an interval of turning on/off of a discharge current in response to an on/off signal from the numerical control apparatus 10. Further, the electric discharge control unit 52 receives a bath voltage between the wire 49 and the workpiece 36, converts the bath voltage to a digital value and supplies the digital value to the numerical control apparatus 10. The numerical control apparatus 10 controls the X-axis servo motor 33 and the Y-axis servo motor 34 so that the XY table 35 moves at a speed corresponding to the bath voltage. Further, the electric discharge control unit 52 electrically detects electrical short between the wire 49 and the workpiece 36 and supplies an electrical short detection signal to the numerical control apparatus 10. The numerical control apparatus 10 supplies a command for releasing the electric short to the electric discharge machine main body 30 in accordance with the electric short detection signal to relatively control the motion of the wire 49 by controlling the XY table 35.

A machining solution processing vessel 47 is composed of a tank, a filter unit, an ion exchanger and the like and supplies a machining solution to a portion to be machined of the workpiece from a jet nozzle 48.

As described above, the numerical control apparatus 10 machines the workpiece by moving the XY table 35 by outputting a control signal, feeding the wire 49 while supplying the machining solution from the nozzle 48 and causing pulse discharge between the wire 49 and the workpiece 36. When the pulse discharge is caused, the surface of the workpiece 36 is vaporized and melted so that the workpiece 36 is machined to a desired configuration.

Note, since a mechanism for controlling a position of the upper wire guide 37 to effect taper machining is not directly related to the present invention, the mechanism is not described here.

FIG. 3 is a schematic block diagram showing hardware of a numerical control apparatus (CNC) for a wire-cut electric discharge machine to which the present invention is applied.

A processor 11 controls the numerical control apparatus 10 as a whole in accordance with a system program stored in a ROM 12, which is an EPROM or EEPROM. A RAM 13 comprises an SRAM or the like, in which various kinds of data, I/O signals as well as setting data and cursor position data to be described below are stored. A non-volatile memory 14 comprises a CMOS backed up by a battery (not shown) and stores parameters, and basic data of machining condition, main programs and the like to be described below, which must be maintained operative even after a power supply is cut off.

A graphic control circuit 15 converts digital signals into display signals, and supplies these signals to a display unit 16. A CRT or liquid crystal display is used as a display screen 31 of the display unit 16, to display correlation graphs, actual machining conditions and the like to be described below. Further, as described later, actual machining conditions are determined by the setting data input by the operator according to a content displayed on the display screen 31.

Further, jobs or data capable of being accepted by the display screen 31 are displayed thereon by a menu mode. A desired item of a menu can be selected by depressing software keys 23 disposed below the menu. A meaning of each software key 23 is varied depending upon a screen.

A keyboard 17 comprises symbolic keys, numerical keys and the like and is used to input the setting data and indicate the movement of a cursor.

As described above, a programmable machine controller (PMC) 22 receives signals such as a bath voltage and the like from the electric discharge machine main body 30 and supplies the signals to the processor 11 through a bus 21. On receiving the bath voltage signal, the processor 11 controls the movements of the X-axis servo motor 33 and the Y-axis servo motor 34 at a speed corresponding to the signals.

On receiving an axis movement command from the processor 11, axis control circuits 18x, 18y output axis commands to servo amplifiers 19x, 19y. On receiving the movement commands, the servo amplifiers 19x, 19y drive the X-axis servo motor 33 and the Y-axis servo motor 34 of the electric discharge machine main body 30. These components are interconnected through the bus 21. Note, a plurality of the processors may be employed to constitute a multi-processor system.

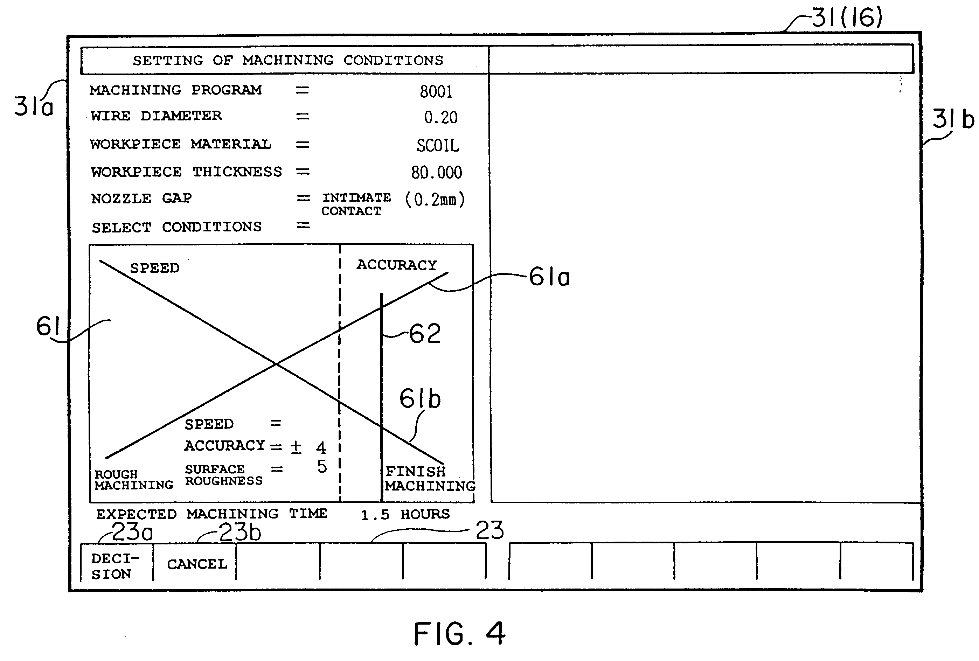

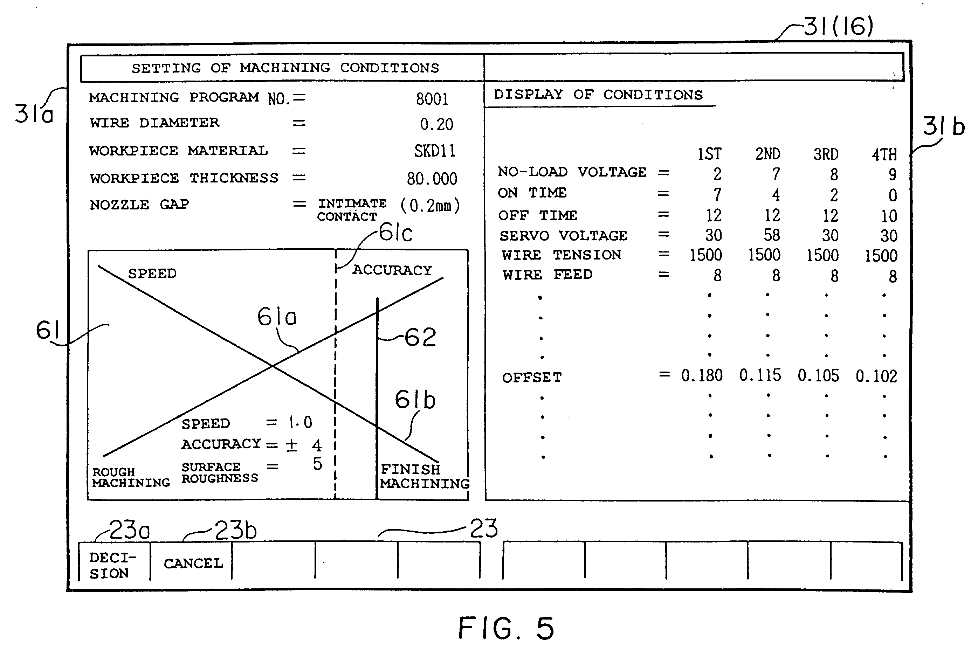

Next, a machining condition setting method according to the present invention will be described with reference to display screens shown in FIG. 4 and FIG. 5.

FIG. 4 is a view showing a first step of the machining condition setting method according to the present invention. In FIG. 4, the display screen 31 is a display screen provided with the numerical control apparatus 10 as described above, wherein a left column 31a is a machining condition setting column and a right column 31b is an actual machining condition display column. The right column 31b is not displayed at the first step and actual machining conditions are displayed to the right column 31b at a second step to be described below.

When machining conditions of the workpiece 36 are to be set, first, the operator inputs setting data according to a content displayed at the upper portion of the left column 31a. That is, the operator inputs data such as a machining program No., wire diameter, material of the workpiece, thickness of the workpiece, and nozzle gap through the keyboard 17 and the software keys 23. The nozzle gap means a distance set between the jet nozzle 48 and the workpiece 36.

A correlation graph 61 showing the correlation between a machining speed and a machining accuracy (dimensional accuracy) is displayed at the lower portion of the left column 31a. The correlation graph 61 is created by means of machining speed data and machining accuracy data of various kinds of basic data of machining condition previously determined by experiment. In the correlation graph 61, a graph 61a showing the machining accuracy is displayed in a right up form and a graph 61b showing the machining speed is displayed in a right down form. This shows that when the machining accuracy is to be increased for finishing machining, the machining speed is decreased on the contrary, and when rough machining is effected by decreasing the machining accuracy, the machining speed can be increased. The operator can instantly know the correlation between the machining accuracy and the machining speed by looking at the correlation graph 61.

When the operator moves a cursor to a "condition selection" column displayed on a line below the setting data on the completion of the input of all the setting data, a graph cursor 62 is made movable. When the graph cursor 62 is moved onto the correlation graph 61 by means of the keyboard 17, the values of the machining speed and the machining accuracy displayed below the correlation graph 61 are changed as the graph cursor 62 moves. More specifically, machining speeds and machining accuracies corresponding to points on the correlation graph 61 indicated by the graph cursor 62 are successively displayed.

As described above, the correlation graph 61 is created by means of the machining speed data and the machining accuracy data of the various kinds of the basic data of machining condition and the values of the above machining speed and machining accuracy are values under the conditions indicated by initially set setting data of the created data. Note, the values of surface roughness are displayed simultaneously with the machining speeds and machining accuracies. The data of the surface roughness are also contained in the basic data of machining condition and the displayed values of surface roughness are values under the conditions shown by the setting data of the basic data of machining condition.

The operator moves the graph cursor 62 on the correlation graph 61 until the values of the machining speed, machining accuracy and surface roughness are set to desired values, and when the desired values are displayed, the operator presses a decision key 23a of the software keys 23. At that time, actual machining conditions are determined and displayed to the right column 31b of the display screen 31 as shown FIG. 5.

FIG. 5 is a view showing a second step of the machining condition setting method according to the present invention. When the operator presses the decision key 23a, actual machining conditions, which have a machining speed displayed at the time as well as by which a machining accuracy and surface roughness displayed at the time can be obtained, are determined. The actual machining conditions are determined based on the basic data of machining condition, the setting data and the position data of the graph cursor 62.

When the decision key 23a is pressed, the number of machining times is simultaneously determined, although the detail of which will be described later, and the actual machining conditions are created for each number of machining times. The actual machining conditions for the each number of machining times are displayed to the right column 31b of the display screen 31, as shown in FIG. 5, wherein the number of machining times is four times. The actual machining conditions include, for example, no-load voltage, electric discharge turned on time, electric discharge turned off time, servo voltage, wire tension, wire feed, amount of offset etc. When it is desired to set actual machining conditions again, the actual machining conditions are canceled and returned to the state of the beginning of the first step by pressing a cancel key 23b.

The number of machining times is determined in accordance with a position of the graph cursor 62. More specifically, when the graph cursor 62 is located at a rough machining position on the left side of a reference line 61c in the correlation graph 61, the number of machining times is set to one, whereas when the graph cursor 62 is located at a finish machining position on the right side of the reference line 61c, the number of machining times is set to twice or more. Thus, as the graph cursor 62 is moved in the right direction from the reference line 61c, the number of machining times is increased to improve a machining accuracy.

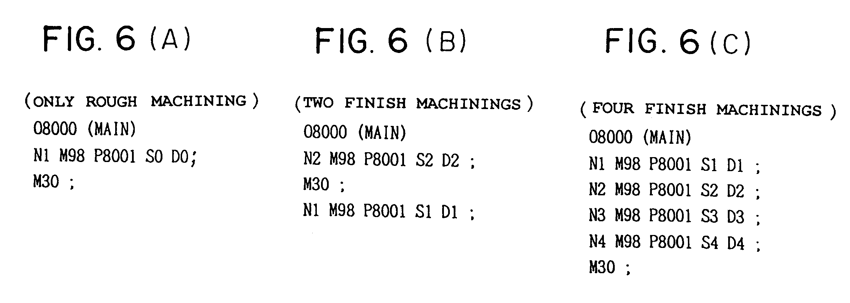

When the decision key 23a is pressed, a main program is automatically created simultaneously with the setting of the actual machining conditions and the number of machining times. The main program is a program for calling a configuration program as well as calling machining conditions and an amount of offset in accordance with the number of machining times. Although machining is executed in accordance with the configuration program, when the number of machining times is two or more, the actual machining conditions and the amount of offset must be switched in each machining step. To cope with this problem, the embodiment automatically creates the main program based on the configuration program. Next, a main program to be automatically created will be described by way of example with reference to FIG. 6 (A), FIG. 6 (B) and FIG. 6 (C).

FIG. 6 (A), FIG. 6 (B) and FIG. 6 (C) are views showing examples of the main program, wherein FIG. 6 (A) shows the principle of creating a program when machining is effected once, FIG. 6 (B) shows the principle of creating a program when machining is effected twice, and FIG. 6 (C) shows the principle of creating a program when machining is effected four times, respectively. In the figures, "O8000" designates an address in which the main program is stored. A code "S" designates a code for calling machining conditions, wherein "S0" means a calling of actual machining conditions for rough machining and "S1", "S2", "S3" and "S4" mean a calling of actual machining conditions for machining to be executed once, twice, three times and four times, respectively. A code "D" is a code for setting an amount of offset, wherein "D0" means a calling of an amount of offset in rough machining and "D1", "D2", "D3" and "D4" mean a calling of an amount of offset for machining to be executed one time, two times, three times and four times, respectively. These amounts of offset are set to become smaller as the number of machining times is increased so that a machining accuracy (dimensional accuracy) is improved. As shown in the figure, a configuration program "8001" is called in accordance with the number of machining times and actual machining conditions are called and an amount of offset is set in accordance with the number of machining times.

As described above, according to this embodiment, when the operator sets a machining speed, machining accuracy and surface roughness on the correlation graph 61, the number of machining times and actual machining conditions are automatically determined and further a main program is also automatically set.

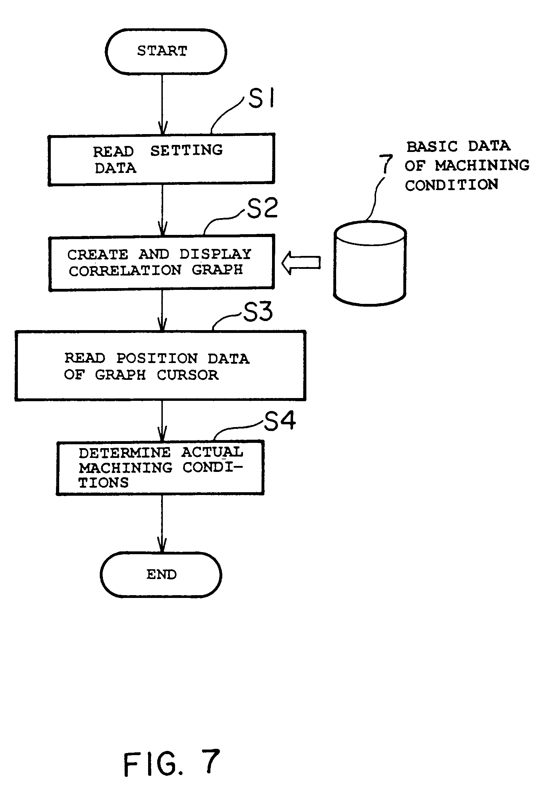

Next, a processing sequence for executing the machining condition setting method according to the present invention will be described with reference to FIG. 7.

FIG. 7 is a flowchart showing a schematic processing sequence of the present invention, wherein numerals prefixed with an "S" indicate the numbers of steps of the process.
[S1] Setting data (data of wire diameter, material of a workpiece, thickness of a workpiece, and nozzle gap) set by the operator are read.
[S2] A correlation graph is created from the setting data and various kinds of the basic data of machining condition 7 and displayed on the display screen. Although the correlation graph is given as several points at first, it is created as lines by further interpolating between the respective points.
[S3] The position of the graph cursor indicated by the operator is read.
[S4] Actual machining conditions are determined from the setting data, basic data of machining condition and the position data of the graph cursor.

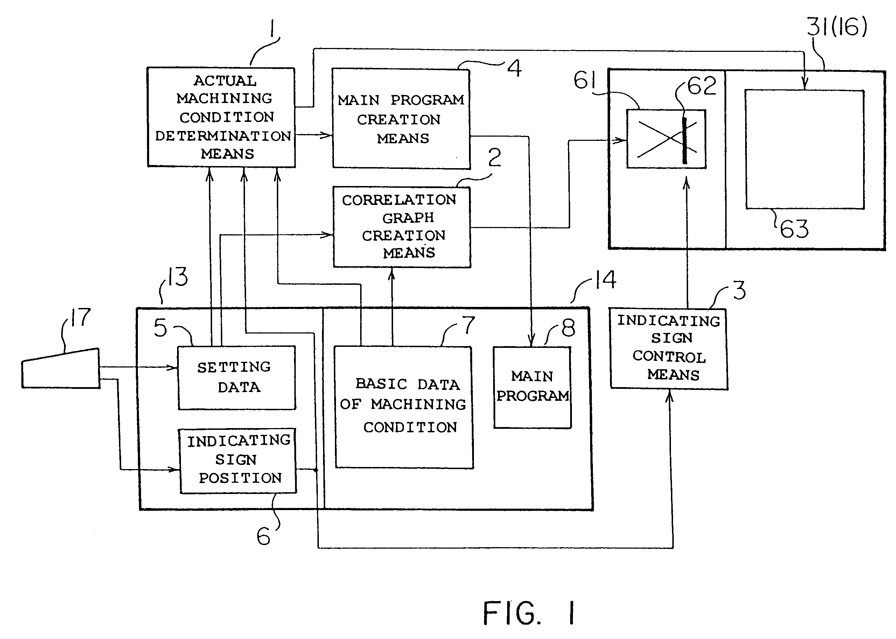

FIG. 1 is a block diagram explaining the principle of the electric discharge machine according to the present invention. In FIG. 1, the electric discharge machine of the present invention comprises correlation graph creation means 2, indicating sign control means 3 and actual machining condition determination means 1. The correlation graph creation means 2 creates data to be displayed by the correlation graph 61 which indicate the correlation between a machining speed and a machining accuracy under the conditions of the input setting data 5 from the experimentally determined basic data of machining condition 7 and displays the display data on the display screen 31.

The indicating sign control means 3 creates the graph cursor 62 to be displayed on the correlation graph 61 as well as moves the graph cursor 62 on the correlation graph 61 by the input keys 17.

The actual machining condition determination means 1 determines a machining speed and a machining accuracy from the indicating sign position 6 of the graph cursor 62 indicated by the input keys 17 and determines actual machining conditions which have the machining speed and by which the machining accuracy can be obtained. The actual machining conditions are determined based on the basic data of machining condition 7, the setting data 5 and the indicating sign position 6 of the graph cursor 62. The thus determined actual machining conditions are displayed to the actual machining condition display column 63 on the display screen 63.

Further, the actual machining condition determination means 1 determines the number of machining times N from the indicating sign position 6 of the graph cursor 62, and the main program creation means 4 creates the main program 8 based on the number of machining times N.

As described above, this embodiment displays the correlation graph 61 showing the correlation between a machining speed and a machining accuracy as well as displays the data of the machining speed, the machining accuracy and a surface roughness by moving the graph cursor 62 on the correlation graph 61. Thus, the operator can visually grasp the correlation between the machining speed and the machining accuracy, so that actual machining conditions can be easily selected and set. As a result, the number of times of retrying the creation of actual machining conditions can be greatly reduced, and thus even an inexperienced operator can set optimum actual machining conditions by a simple operation.

Further, the reference line 61c (FIG. 5) is displayed on the correlation graph 61 and the number of machining times is determined depending upon whether the graph cursor 62 is located on the right side or the left side of the reference line 61. Thus, the operator can previously know the number of machining times N before actual machining conditions are set, so that the operator can properly set desired actual machining conditions by taking a delivery time and the like of finished products into consideration.

Further, a main program by which machining can be executed N times can be automatically created. When a program for executing machining a plurality of times is created, actual machining conditions and an amount of offset must be usually varied successively. Since the main program including the actual machining conditions and the amount of offset is automatically created, however, a period of time needed by the operator to create the program can be greatly reduced.

Although a correlation graph is created between a machining speed and a machining accuracy in the above description, the correlation graph may be created between the machining speed and a surface roughness. Further, the correlation graph may be created between three factors, i.e., between the machining speed, the machining accuracy and the surface roughness.

As described above, according to the present invention, since a correlation graph showing the correlation between a machining speed and a machining accuracy is displayed and actual machining conditions can be determined on the correlation graph, the operator can visually grasp the correlation between the machining speed and the machining accuracy, so that actual machining conditions can be easily selected and set as well as the number of times of retrying the creation of actual machining conditions can be greatly reduced. Consequently, even an inexperienced operator can set optimum actual machining conditions by a simple operation.

## Claims

1. An electric discharge machine having a function for automatically determining machining conditions, comprising:
correlation graph creation means for creating a correlation graph showing correlation between a machining speed and a machining accuracy in input setting data from basic data of machining condition previously determined by experiment and displaying the correlation graph on a display screen;
indicating sign control means for creating an indicating sign to be displayed on said display screen as well as moving the indicating sign to a position on the correlation graph indicated by input keys; and
actual machining condition determination means for determining actual machining conditions from the basic data of machining condition, the setting data and the position indicated by the indicating sign.

2. An electric discharge machine according to claim 1, wherein said actual machining condition determination means includes main program creation means for determining the number of machining times from the position indicated by the indicating sign and creating a main program including the number of machining times.

3. A machining condition determination method of an electric discharge machine for automatically setting machining conditions of the electric discharge machine, comprising the steps of:
creating a correlation graph showing correlation between a machining speed and a machining accuracy in input setting data from basic data of machining condition previously determined by experiment;
displaying the correlation graph on a display screen;
reading a machining speed and a machining accuracy corresponding to a point on the correlation graph indicated by an indicating sign on said display screen; and
determining actual machining conditions having the machining speed and the machining accuracy by means of the basic data of machining condition and the setting data.

4. A machining condition determination method of an electric discharge machine according to claim 3, wherein numerical values of a machining speed and a machining accuracy corresponding to the indicating sign are displayed on said display screen.

5. A machining condition determination method of an electric discharge machine according to claim 3, wherein a curve showing surface roughness is further shown to the correlation graph.

6. A machining condition determination method of an electric discharge machine according to claim 3, wherein the determined actual machining conditions are displayed on said display screen.

7. A machining condition determination method of an electric discharge machine according to claim 3, wherein the determined machining conditions include the number of machining times and a main program including the number of machining times is created.

## Patentansprüche

1. Elektro-Erodiermaschine mit einer Funktion zur automatischen Bestimmung von Bearbeitungsbedingungen, bestehend aus:
Mitteln zum Erzeugen eines Korrelationsgraphs für den Zusammenhang zwischen einer Bearbeitungsgeschwindigkeit und einer Bearbeitungsgenauigkeit durch Eingabe von Einstelldaten aus Grunddaten einer vorher experimentell bestimmten Arbeitsbedingung und Anzeige des Korrelationsgraphen auf einem Bildschirm;
Steuermitteln zum Erzeugen eines Hinweises zur Anzeige auf dem Bildschirm sowie zum Verschieben des Hinweises in eine Position auf dem Korrelationsgraph, die mit Hilfe von Eingabestasten erfolgt; und
Bestimmungsmitteln zum Bestimmen der aktuellen Bearbeitungsbedingungen aus den Grunddaten der Bearbeitungsbedingung, den Einstelldaten und der von dem Hinweiszeichen angezeigten Position.

2. Elektro-Erodiermaschine nach Anspruch 1, bei der die Bestimmungsmitteln für die aktuelle Bearbeitungsbedingungen Mittel zum Erzeugen eines Hauptprogramms aufweisen, um die Anzahl der Bearbeitungsdurchgänge aus der Position des Hinweiszeichens zu bestimmen und ein Hauptprogramm für die Anzahl der Bearbeitungsdurchgänge zu erzeugen.

3. Verfahren zum Bestimmen der Bearbeitungsbedingungen einer Elektro-Erodiermaschine für eine automatische Einstellung der Bearbeitungsbedingungen der Elektro-Erodiermaschine mit folgenden Schritten:
Ein Korrelationsgraph für den Zusammenhang einer Bearbeitungsgeschwindigkeit und einer Bearbeitungsgenauigkeit wird durch Eingabe von Einstelldaten aus Grunddaten einer vorher experimentell bestimmten Bearbeitungsbedingung erzeugt;
der Korrelationsgraph wird auf einem Bildschirm abgebildet;
eine Bearbeitungsgeschwindigkeit und Bearbeitungsgenauigkeit entsprechend einem Punkt im Korrelationsgraph, wie er von einem Hinweisanzeiger auf dem Bildschirm angezeigt wird, wird gelesen und
die aktuellen Bearbeitungsbedingungen für die Bearbeitungsgeschwindigkeit und Bearbeitungsgenauigkeit werden mittels der Grunddaten der Bearbeitungsbedingung und der Einstelldaten ermittelt.

4. Verfahren nach Anspruch 3, bei dem die numerischen Werte einer Bearbeitungsgeschwindigkeit und Bearbeitungsgenauigkeit entsprechend der Positionsanzeige auf dem Bildschirm abgebildet werden.

5. Verfahren nach Anspruch 3, bei dem eine Kurve für die Flächenrauhigkeit zusätzlich im Korrelationsgraph angezeigt wird.

6. Verfahren nach Anspruch 3, bei dem die bestimmten aktuellen Bearbeitungsbedingungen auf dem Bildschirm abgebildet werden.

7. Verfahren nach Anspruch 3, bei dem die ermittelten Bearbeitungsbedingungen die Anzahl der Bearbeitungsdurchgänge beinhalten und ein Hauptprogramm für die Anzahl der Bearbeitungsdurchgänge erzeugt wird.

## Revendications

1. Machine d'usinage par électroérosion présentant une fonction de détermination automatique des conditions d'usinage, comportant:
un moyen de création d'un graphe de corrélation, pour créer un graphe de corrélation qui montre la corrélation entre une vitesse d'usinage et une précision d'usinage dans des données de réglage introduites, à partir de données de base de conditions d'usinage préalablement déterminées par expérience, et pour afficher le graphe de corrélation sur un écran d'affichage;
un moyen de commande de signe indicatif, pour créer un signe indicatif à afficher sur ledit écran d'affichage, de même que pour amener le signe indicatif dans une position sur le graphe de corrélation indiquée par des touches d'introduction; et
un moyen de détermination des conditions effectives d'usinage, pour déterminer des conditions effectives d'usinage à partir des données de base des conditions d'usinage, des données de réglage et de la position indiquée par le signe indicatif.

2. Machine d'usinage par électroérosion selon la revendication 1, dans laquelle lesdits moyens de détermination des conditions effectives d'usinage comprennent des moyens de création d'un programme principal, pour déterminer le nombre de passes d'usinage à partir de la position indiquée par le signe indicatif, et pour créer un programme principal contenant le nombre de passes d'usinage.

3. Procédé de détermination de conditions d'usinage d'une machine d'usinage par électroérosion, pour le réglage automatique des conditions d'usinage de la machine d'usinage par électroérosion, comportant les étapes consistant à:
créer un graphe de corrélation montrant la corrélation entre une vitesse d'usinage et une précision d'usinage dans des données de réglage introduites, à partir de données de base des conditions d'usinage préalablement déterminées par expérience;
afficher le graphe de corrélation sur un écran d'affichage;
lire une vitesse d'usinage et une précision d'usinage correspondant à un point du graphe de corrélation désigné par un signe indicatif sur ledit écran d'affichage; et
déterminer des conditions effectives d'usinage présentant la vitesse d'usinage et la précision d'usinage, au moyen des données de base des conditions d'usinage et des données de réglage.

4. Procédé de détermination de conditions d'usinage d'une machine d'usinage par électroérosion selon la revendication 3, dans laquelle des valeurs numériques d'une vitesse d'usinage et d'une précision d'usinage correspondant au signe indicatif sont affichées sur ledit écran d'affichage.

5. Procédé de détermination de conditions d'usinage d'une machine d'usinage par électroérosion selon la revendication 3, dans lequel une courbe montrant la rugosité de surface est en outre présentée sur le graphe de corrélation.

6. Procédé de détermination de conditions d'usinage d'une machine d'usinage par électroérosion selon la revendication 3, dans lequel les conditions effectives d'usinage déterminées sont affichées sur ledit écran d'affichage.

7. Procédé de détermination de conditions d'usinage d'une machine d'usinage par électroérosion selon la revendication 3, dans lequel les conditions d'usinage déterminées comprennent le nombre de passes d'usinage et un programme principal contenant le nombre de passes d'usinage est créé.
